# EUROPÄISCHE PATENTSCHRIFT

(11) **EP 4 147 907 B1**
(45) Veröffentlichungstag und Bekanntmachung des Hinweises auf die Patenterteilung: **21.01.2026**
(21) Anmeldenummer: 22185608.1
(22) Anmeldetag: 19.07.2022
(51) Int. Cl.: B60N 2/90, B60N 2/02, B60W 50/16, B60N 2/66

(54) **ANORDNUNG ZUR TAKTILEN KOMMUNIKATION, FAHRZEUG MIT DER ANORDNUNG UND VERFAHREN ZUR TAKTILEN KOMMUNIKATION MIT DER ANORDNUNG**
TACTILE COMMUNICATION ASSEMBLY, VEHICLE WITH THE ASSEMBLY AND METHOD FOR TACTILE COMMUNICATION WITH THE ASSEMBLY
DISPOSITIF DE COMMUNICATION TACTILE, VÉHICULE DOTÉ DU DISPOSITIF ET PROCÉDÉ DE COMMUNICATION TACTILE À L'AIDE DU DISPOSITIF

(30) Priorität: 08.09.2021 DE 102021209927
(43) Veröffentlichungstag der Anmeldung: 15.03.2023
(73) Patentinhaber: Stellantis Auto SAS, 78300 Poissy (FR)
(72) Erfinder: KUHLEY, Christian, 65428 Rüsselsheim am Main (DE)
(74) Vertreter: BCIP

(56) Entgegenhaltungen:
- DE-A1- 102015 117 980
- DE-A1- 102015 219 461
- DE-A1- 102016 005 921
- DE-A1- 102019 101 935
- DE-A1- 102020 101 028

## Beschreibung

### Technisches Gebiet:

Die Erfindung betrifft eine Anordnung zur taktilen Kommunikation, wobei die Anordnung in einem Fahrzeug integrierbar ist. Die Erfindung betrifft auch ein Fahrzeug mit der Anordnung und ein Verfahren zur taktilen Kommunikation mit der Anordnung.

### Hintergrund:

Die Möglichkeit der Verstellung von Seitenwangen eines Fahrzeugsitzes zur Anpassung einer Sitzbreite und zur seitlichen Abstützung eines Insassen z.B. bei Kurvenfahren ist bereits bekannt.

Beispielsweise beschreibt die Druckschrift DE 10 2020 101 028 A1 einen Fahrzeugsitz mit einer anpassbaren Seitenstützung, wobei ein elastisch verformbares Seitenwangenpolster des Fahrzeugsitzes mittels eines Aktors elastisch verformbar ist, um den Insassen auf dem Fahrzeugsitz seitlich zu stützen.

Aus dem Stand der Technik sind ferner die Dokumente DE 10 2016 005921 A1, DE 10 2015 219461 A1, DE 10 2019 101935 A1, DE 10 2019 101935 A1, DE 10 2015 117980 A1 und DE 10 2020 101028 A1 bekannt.

### Beschreibung:

Der Erfindung liegt die Aufgabe zugrunde, die Verstellung von Seitenwangen funktional erweitert zu nutzen. Diese Aufgabe wird durch eine Anordnung zur taktilen Kommunikation mit den Merkmalen des Anspruchs 1, durch ein Fahrzeug mit der Anordnung gemäß dem Anspruch 12 und durch ein Verfahren zur taktilen Kommunikation mit der Anordnung mit den Merkmalen des Anspruchs 13 gelöst. Bevorzugte oder vorteilhafte Ausführungsformen der Erfindung ergeben sich aus den Unteransprüchen, der nachfolgenden Beschreibung und/oder den beigefügten Figuren.

Es wird eine Anordnung zur taktilen Kommunikation vorgeschlagen. Die Anordnung ist in einem Fahrzeug, z.B. in einem Pkw oder in einem Nutzfahrzeug, integrierbar. Die Anordnung umfasst mindestens eine Triggervorrichtung. Die Triggervorrichtung ist dazu ausgebildet, mindestens ein bevorzugt fahrzeug- oder insassenbezogenes auslösendes Ereignis umzusetzen und/oder auszugeben. Unter "fahrzeugbezogenes auslösendes Ereignis" ist insbesondere zu verstehen, dass das auslösende Ereignis auf einem Zustand des Fahrzeugs, von Fahrzeugkomponenten, von einer Umgebung des Fahrzeugs, z.B. von anderen Verkehrsteilnehmern, Verkehrszeichen und/oder der Fahrbahn basiert und durch diese/dieses hervorgerufen wird. Unter insassenbezogenes auslösendes Ereignis" ist insbesondere zu verstehen, dass das auslösende Ereignis auf einem Verhalten und/oder Befinden des/der Insassen des Fahrzeugs, insbesondere des Fahrzeugführers, des Beifahrers und/oder mindestens eines weiteren Passagiers, basiert und durch dieses hervorgerufen wird.

Die Anordnung weist mindestens einen Fahrzeugsitz auf. Bei dem Fahrzeugsitz handelt es sich beispielsweise um einen Sitz einer vorderen Sitzreihe des Fahrzeugs, insbesondere um einen Fahrersitz oder um einen Beifahrersitz. Alternativ kann der Fahrzeugsitz als ein Sitz einer hinteren Sitzreihe des Fahrzeugs ausgebildet sein. Vorzugsweise umfasst der Fahrzeugsitz einen Sitz und eine Rückenlehne. Insbesondere sind an beiden Seiten des Sitzes und/oder der Rückenlehne Seitenwangen angeordnet, welche eine Sitzfläche des Sitzes beziehungsweise eine Anlehnfläche der Rückenlehne seitlich begrenzen.

Der Fahrzeugsitz umfasst eine Funktionsvorrichtung. Die Funktionsvorrichtung ist dazu ausgebildet, mindestens eine Kommunikationsfunktion auszuführen, um mit einem Insassen auf dem Fahrzeugsitz taktil zu kommunizieren. Insbesondere kann die Funktionsvorrichtung bei Ausführung der Kommunikationsfunktion taktile Reize auf den Insassen übermitteln, welche dieser passiv als Kommunikation wahrnimmt.

Die Anordnung weist eine Steuerungseinrichtung auf. Die Steuerungseinrichtung ist dazu ausgebildet die Funktionsvorrichtung in Abhängigkeit des auslösenden Ereignisses anzusteuern. Vorzugsweise startet die Steuerungseinrichtung die Funktionsvorrichtung bei Auftreten des auslösenden Ereignisses. Insbesondere steuert die Steuerungseinrichtung die Funktionsvorrichtung nach einem definierten und/oder definierbaren Zeitraum dazu an, die Ausführung der Kommunikationsfunktion zu beenden.

Die Funktionsvorrichtung umfasst eine Seitenwangenverstelleinheit. Die Kommunikationsfunktion der Seitenwangenverstelleinheit ist ein Verstellen mindestens einer, bevorzugt mehrerer Seitenwangen des Fahrzeugsitzes. Vorzugsweise können die beiden Seitenwangen des Sitzes und/oder der Rückenlehne mittels der Seitenwangenverstelleinheit als die Kommunikationsfunktion verstellt werden.

Vorteilhaft ist, dass durch das Verstellen der Seitenwangen bevorzugt ergänzend zu herkömmlichen Funktionen, wie der Breitenanpassung der Sitzfläche beziehungsweise der Anlehnfläche und/oder des seitlichen Abstützens des auf dem Fahrzeugsitz sitzenden Insassen, zur Kommunikation mit dem Insassen genutzt werden kann.

In einer möglichen Ausführungsform der Erfindung umfasst das Verstellen ein Aufstellen und Zurückstellen der Seitenwangen. Vorzugsweise nehmen die Seitenwangen eine ursprüngliche Position ein, welche eine Nullstellung oder eine Memoryposition sein kann. Insbesondere werden die Seitenwangen aus der ursprünglichen Position heraus aufgestellt und wieder in die ursprüngliche Position zurückgestellt. Beispielsweise können die Seitenwangen simultan oder abwechselnd aufgestellt und zurückgestellt werden. Das Aufstellen und das Zurückstellen der Seitenwangen kann gleichlang oder unterschiedlich lang andauern. Möglich ist es im Rahmen der Erfindung auch, dass die Seitenwangen bei dem Verstellen aufgestellt, über einen vorgegebenen oder vorgebbaren Zeitraum, z.B. von einer oder mehreren Sekunden, gehalten und danach wieder zurückgestellt werden. Das Verstellen kann nach einem festgelegten Bewegungsmuster erfolgen, wobei das Verstellen einmalig oder mehrmalig nacheinander erfolgen kann und/oder ein bestimmter Verstellrhythmus umgesetzt wird.

In einer weiteren möglichen Ausführungsform umfasst die Funktionsvorrichtung eine Massage- und/oder Vibrationseinheit. Vorzugsweise ist die Kommunikationsfunktion der Massage- und/oder Vibrationseinheit eine Massage- und/oder Vibrationsausführung an zumindest einem Bereich des Fahrzeugsitzes, z.B. an den Seitenwangen, dem Sitz und/oder an der Rückenlehne. Beispielsweise umfasst die Massage- und/oder Vibrationseinheit Massagemittel, z.B. Kugeln, Rollen oder Walzen und mindestens einen Aktor, welche die Massagemittel in Bewegung versetzen kann und/oder die Vibrationen erzeugen kann. Insbesondere wird die Massage und/oder die Vibration zur taktilen Kommunikation mit dem Insassen auf dem Fahrzeugsitz gestartet. Beispielsweise wird über eine oder mehrere Sekunden hinweg eine festgelegte Massagebewegung und/oder Vibration zur Kommunikation mit dem Insassen ausgeführt. Vorteilhaft ist, dass die Massage- und Vibrationseinheit neben der klassischen Massage- und Entspannungsfunktion zur Kommunikation mit dem Insassen erweitert genutzt werden kann.

Eine mögliche Umsetzung der Erfindung sieht vor, dass die Funktionseinrichtung eine Verstelleinheit umfasst. Vorzugsweise ist die Kommunikationsfunktion der Verstelleinheit die Verstellung des Fahrzeugsitzes, insbesondere des Sitzes und/oder der Rückenlehne. Beispielsweises umfasst die Verstelleinheit mindestens einen, bevorzugt mehrere Aktoren, welche mit einer Struktur des Sitzes und/oder der Rückenlehne wirkverbunden sind. Bevorzugt können die Aktoren den Sitz und die Rückenlehne relativ zueinander bewegen, z.B. von einer aufrechten Stellung in eine Liegestellung und zurück überführen. Optional ergänzend können die Aktoren den Fahrzeugsitz in eine Fahrzeuglängsrichtung verfahren. Beispielsweise wird der Fahrzeugsitz in eine festgelegte Stellung überführt, um die Kommunikationsfunktion auszuführen. Insbesondere kann durch die Verstellung des Fahrzeugsitzes auf taktile Art mit dem Insassen auf dem Fahrzeugsitz kommuniziert werden. Vorteilhaft ist, dass die Verstellung des Fahrzeugsitzes nicht nur zur Anpassung an eine Körpergröße und/oder an eine bevorzugte Sitzhaltung des Insassen genutzt werden kann, sondern durch den Einsatz zur taktilen Kommunikation eine funktionale Erweiterung erfährt.

In einer weiteren möglichen Umsetzung der Erfindung umfasst die Funktionsvorrichtung eine Lordosenstützenverstelleinheit. Vorzugsweise ist die Kommunikationsfunktion der Lordosenstützenverstelleinheit eine Verstellung einer Lordosenstütze, welche in der Rückenlehne integriert ist. Beispielsweise umfasst die Lordosenstützenverstelleinheit einen weiteren Aktor zur Verstellung der Lordosenstütze, insbesondere zum Ein- oder Ausfahren und/oder zur Höhenanpassung der Lordosenstütze. Beispielsweise wird die Lordosenstütze in eine festgelegte Stellung überführt, um die Kommunikationsfunktion auszuführen. Die Lordosenstützenverstelleinheit kann nicht nur dazu verwendet werden, dem Insassen ein ergonomisches Sitzen zu ermöglichen. Vielmehr kann die Lordosenstützenverstelleinheit durch Übernahme der taktilen Kommunikationsfunktion funktional erweitert genutzt werden.

In einer möglichen Ausführungsform der Erfindung umfasst die Triggervorrichtung eine Warn- und/oder Hinweiseinrichtung. Vorzugsweise gibt die Warn- und/oder Hinweiseinrichtung einen Hinweis und/oder eine Warnung als das auslösende Ereignis aus. Vorzugsweise gibt der Hinweis und/oder die Warnung dem Insassen an, dass ein Spurhalteassistent aktiv ist, dass eine Fahrzeugtür geöffnet ist, dass ein Sicherheitsgurt während der Fahrt auf einem belegten Sitzplatz nicht angelegt ist, dass eine Fahrzeuginspektion ansteht, dass ein Motorfehler vorliegt, dass ein anderer Verkehrsteilnehmer dem Fahrzeug zu nahe kommt, dass eine Ermüdung des Fahrzeugführers erkannt wurde, etc.

Beispielsweise ist die Warn- und/oder Hinweiseinrichtung eine Anzeigeeinrichtung, insbesondere ein Display oder eine Beleuchtungseinrichtung, z.B. eine Warnleuchte oder eine Innenraum- und/oder Ambientenbeleuchtung. Vorzugsweise kann auf dem Display ein Symbol, Zeichen oder eine Zeichenserie als Hinweis und/oder Warnung angezeigt werden. Bevorzugt kann mittels der Beleuchtungseinrichtung ein bestimmter oder bestimmbarer Farbton oder Farbwechsel, ein Warn- oder Blinklicht abgestrahlt werden.

Die Warn- und/oder Hinweiseinrichtung kann alternativ oder optional ergänzend eine Audioeinrichtung zur akustischen Ausgabe eines Tons, einer Tonfolge, eines Geräusches oder einer Sprachansage umfassen, um damit dem Insassen den Hinweis und/oder die Warnung zu übermitteln. Möglich ist es im Rahmen der Erfindung auch, dass die Warn-und/oder Hinweiseinrichtung ein Lenkrad mit einer integrierten Vibrationseinrichtung ist. Insbesondere lässt die Vibrationseinrichtung das Lenkrad zur Ausgabe des Hinweises und/oder der Warnung vibrieren.

Die Funktionsvorrichtung kann den Hinweis und/oder die Warnung mittels der Kommunikationsfunktion taktil an den Insassen auf dem Fahrzeugsitz kommunizieren. Insbesondere kann der Hinweis und/oder die Warnung dem Insassen zusätzlich zu der Ausgabe der Warn- und/oder Hinweiseinrichtung mitgeteilt werden. Durch die taktile Kommunikation kann der Hinweis und/oder die Warnung direkt spürbar an den Insassen übermittelt werden, insbesondere kann vermieden werden, dass der Insasse den Hinweis und/oder die Warnung auf der Anzeigeeinrichtung überhört oder z.B. aufgrund von lauter Musik im Fahrzeug überhört. Dadurch, dass die Kommunikationsfunktion durch festgelegte, immer wieder gleiche Bewegungsabläufe und/oder Stellungen umgesetzt wird, wird sie dem Insassen schnell vertraut, so dass er sie alsbald als die Hinweise und/oder Warnungen erkennt und entsprechende Reaktionen einleiten kann. Dies kann zur Erhöhung der Sicherheit während der Fahrt beitragen.

Erfindungsgemäß umfasst die Triggervorrichtung eine Zündung zum Zünden oder einen Motoranlasser zum Anlassen eines Motors des Fahrzeugs. Vorzugsweise bildet das Zünden oder das Anlassen des Motors das auslösende Ereignis, in dessen Abhängigkeit die Steuerungseinrichtung die Funktionsvorrichtung zur Ausführung der Kommunikationsfunktion ansteuert. Wenn das Fahrzeug gestartet wird, bedeutet dies in einer überwiegenden Zahl der Fälle, dass der Insasse geradeeben in das Fahrzeug eingestiegen ist und auf dem Fahrzeugsitz Platz genommen hat. Die Funktionsvorrichtung kann in diesem Fall mittels der Kommunikationsfunktion eine Begrüßung des Insassen auf dem Fahrzeugsitz taktil kommunizieren.

Beispielsweise kann durch das Aufstellen, optionale Halten und das anschließende Zurückstellen der Seitenwangen des Fahrzeugsitzes eine Umarmung oder ein liebevolles Drücken des Insassen zu dessen Begrüßung simuliert werden, wenn dieser auf dem Fahrzeugsitz Platz genommen hat und das Fahrzeug startet. Möglich ist alternativ oder ergänzend, dass der Fahrzeugsitz und/oder die Lordosenstütze in die bevorzugte Stellung des Insassen verstellt wird und/oder dass eine Kurzmassage und/oder Vibration zur Kommunikation eines Willkommensgrußes durchgeführt wird.

Vorteilhaft ist, dass mittels der Funktionsvorrichtung eine physische Interaktion zwischen dem Fahrzeugsitz und dem Insassen ermöglicht wird, die insbesondere mit einer persönlichen Umarmung oder Hände schütteln vergleichbar ist. Durch die nonverbale taktile Kommunikation kann der Fahrzeugsitz und/oder das Fahrzeug eine persönliche Präsenz gegenüber dem Insassen ausstrahlen. Insbesondere kann das Fahrzeug gegenüber dem Insassen personalisiert werden. Das Fahrzeug kann auf den Insassen persönlicher wirken, was zu einer Verbundenheit mit dem Fahrzeug und zu einem Wohlgefühl oder sogar zu einem Gefühl der Geborgenheit des Insassen in dem Fahrzeug beitragen kann.

Ein Fahrzeug mit der Anordnung nach der bisherigen Beschreibung und/oder nach einem der Ansprüche 1 bis 13 bildet einen weiteren Gegenstand der Erfindung. Vorzugsweise handelt es sich bei dem Fahrzeug um einen Pkw oder um ein Nutzfahrzeug.

Einen weiteren Gegenstand bildet ein Verfahren zur taktilen Kommunikation mit der Anordnung nach einem der Ansprüche 1 bis 13, dadurch gekennzeichnet, dass die Kommunikationsfunktion in Abhängigkeit des auslösenden Ereignisses angesteuert wird und dadurch mit einem auf dem Fahrzeugsitz sitzenden Insassen taktil kommuniziert wird.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine schematische Übersichtsdarstellung einer Anordnung zur taktilen Kommunikation für ein Fahrzeug;
- Figur 2: eine Seitenansicht eines Fahrzeugsitzes des Fahrzeugs mit einer Rückenlehne und mit einem Sitz;
- Figur 3: eine Schnittansicht des Fahrzeugsitzes entlang der Schnittlinie A-A, wobei der Fahrzeugsitz eine Seitenwangenerstelleinheit zum Verstellen von Seitenwangen des Fahrzeugsitzes umfasst;
- Figur 4: Klappen der Seitenwangenverstelleinheit in einer aktiven Stellung;
- Figur 5: ein Positions-Zeit-Diagramm über das Verstellen der Seitenwangen des Fahrzeugsitzes als taktile Kommunikationsfunktion
- Figur 6: ein weiteres Positions-Zeit-Diagramm über das Verstellen der Seitenwangen des Fahrzeugsitzes als taktile Kommunikationsfunktion.

Einander entsprechende oder gleiche Teile sind in den Figuren jeweils mit den gleichen Bezugszeichen versehen.

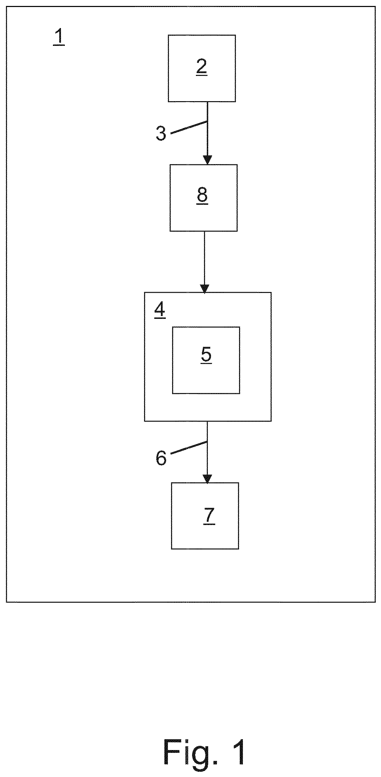

**Die** **Figur 1** **zeigt eine schematische Übersichtsdarstellung einer Anordnung 1, welche zur taktilen Kommunikation mit einem Insassen 7 eines Fahrzeugs ausgebildet ist. Die Anordnung 1 kann in einem Fahrzeug, z.B. in einem Pkw oder Nutzfahrzeug, integriert werden/sein.**

Die Anordnung 1 umfasst mindestens eine Triggervorrichtung 2. Die Triggervorrichtung 2 setzt ein bevorzugt fahrzeug- und/oder insassenbezogenes auslösendes Ereignis 3 um und/oder gibt es aus. Das auslösende Ereignis 3 kann z.B. ein Hinweis und/oder Warnung sein, der/die sich auf das Fahrzeug bezieht. Bei dem Hinweis kann es sich um eine Information über eine anstehende Fahrzeuginspektion, um die Mitteilung eines Schadens oder Ölstands, um die Information über eine nicht angeschnallte Person im Fahrzeug, oder um den Hinweis auf eine Übermüdungssituation des Fahrzeugführers, o.ä. handeln. Es kann z.B. vor der schnellen Annäherung eines anderen Verkehrsteilnehmers, vor Gefahrensituationen auf der Fahrbahn gewarnt werden.

Die Triggervorrichtung 2 umfasst eine Anzeigeeinrichtung, z.B. ein Display im Bereich eines Armaturenbretts oder einer Instrumentenanzeige des Fahrzeugs, auf dem der Hinweis und/oder die Warnung als Symbol, Zeichen oder Zeichenfolge angezeigt werden kann. Die Triggervorrichtung umfasst alternativ oder optional ergänzend eine Beleuchtungseinrichtung, z.B. eine Warnleuchte oder Innenraumbeleuchtung, die eine Farbe, einen Farbwechsel, ein Dauer- oder Blicklicht als den Hinweis und/oder die Warnung abstrahlt. Möglich ist auch, dass die Triggervorrichtung 2 ein Lenkrad mit einer Vibrationseinrichtung umfasst, welche vibriert, um den Hinweis und/oder die Warnung dem Fahrzeugführer als Insassen 7 mitzuteilen. Die Triggervorrichtung 2 kann auch eine Audioeinrichtung aufweisen, welche einen Ton, eine Tonfolge, ein Geräusch oder eine Sprachansage als Hinweis und/oder Warnung ausgibt.

Die Triggervorrichtung 2 umfasst weiterhin eine Zündung oder einen Motoranlasser, die/der betätigt wird, um das Fahrzeug zu starten. Das auslösende Ereignis 3 ist in diesem Fall das Starten des Fahrzeugs, insbesondere ein Zünden oder ein Anlassen des Motors des Fahrzeugs.

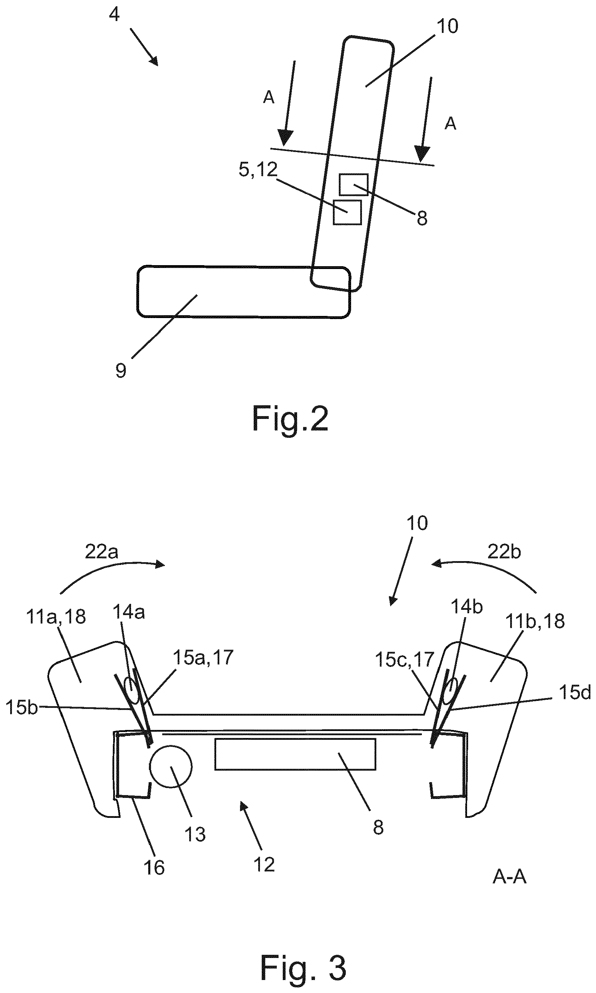

Die Anordnung 1 weist einen Fahrzeugsitz 4 auf, welcher gemäß der Figur 2 als ein Fahrersitz, Beifahrersitz oder als ein Sitz einer hinteren Sitzreihe des Fahrzeugs ausgebildet ist. In dem Fahrzeugsitz 4 ist eine Funktionsvorrichtung 5 integriert. Die Funktionsvorrichtung 5 kann eine Kommunikationsfunktion 6 ausführen, mittels welcher nonverbal und taktil mit dem Insassen 7, der auf dem Fahrzeugsitz 4 sitzt, kommuniziert werden kann.

Die Anordnung 1 umfasst eine Steuerungseinrichtung 8, welche die Funktionsvorrichtung 5 in Abhängigkeit des auslösenden Ereignisses 3 ansteuert. Bei Auftreten des auslösenden Ereignisses 3 wird die Funktionsvorrichtung 5 zur Ausführung der Kommunikationsfunktion 6 gestartet. Die Kommunikationsfunktion 6 umfasst eine Mehrzahl an Bewegungen und/oder Bewegungsabläufen an dem Fahrzeugsitz 4.

In der Figur 2 ist eine Seitenansicht des Fahrzeugsitzes 4 gezeigt. Der Fahrzeugsitz 4 weist einen Sitz 9 und eine Rückenlehne 10 auf. Die Figur 3 zeigt einen Querschnitt durch die Rückenlehne 10 entlang der Schnittlinie A-A. An beiden Seiten der Rückenlehne 10 sind Seitenwangen 11a, 11b angeordnet. Weitere zwei Seitenwangen können an beiden Seiten des Sitzes 9 angeordnet sein.

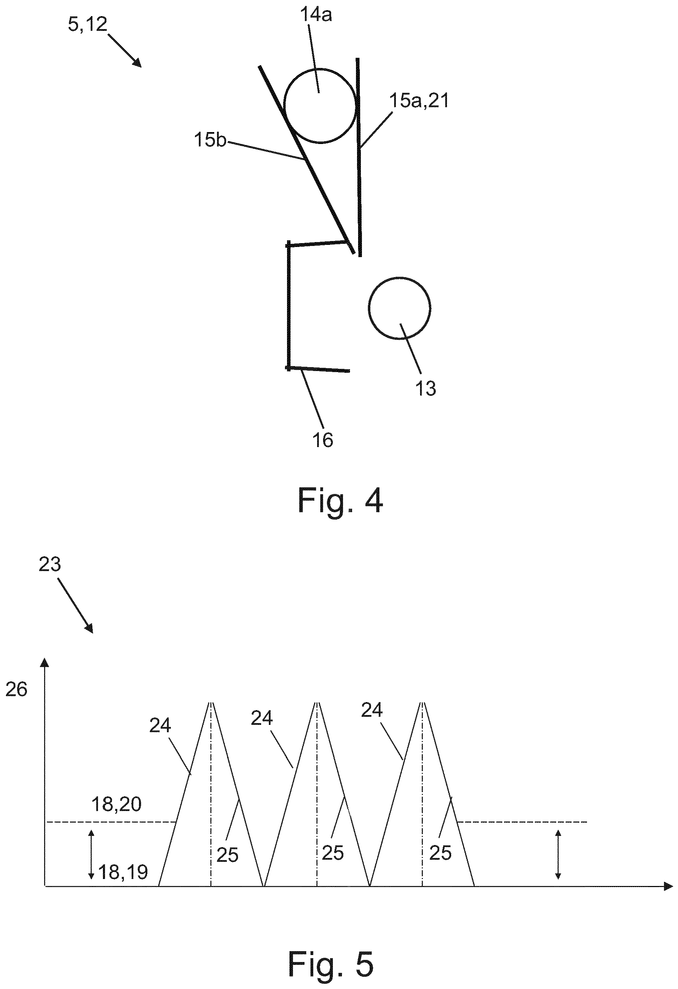

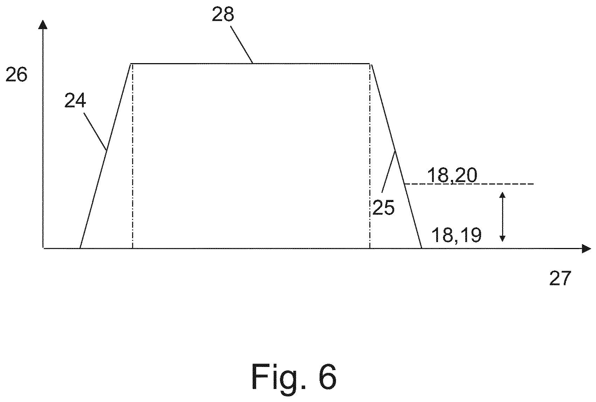

In dem Fahrzeugsitz 4 sind die Funktionseinrichtung 5 und die Steuerungseinrichtung 8 integriert. Die Funktionseinrichtung 5 umfasst eine Seitenwangenverstelleneinheit 12, deren Kommunikationsfunktion 6 es ist, eine oder beide Seitenwangen 11a, 11b der Rückenlehne 10 und/oder des Sitzes 9 zu verstellen. Das Verstellen 26 umfasst, wie aus den Figuren 5 und 6 zu entnehmen, ein Aufstellen 24 und ein Zurückstellen 25 der Seitenwangen 11a, 11b und optional ein Halten 28 der aufgestellten Seitenwangen 11a, 11b über einen gewissen Zeitraum vor dem Zurückstellen 25.

Die Seitenwangenverstelleinheit 12 umfasst einen Kompressor 13 und mindestens zwei Luftkammern 14a, 14b, wobei jeder Seitenwange 11a, 11b eine Luftkammer 14a, 14b zugeordnet ist. Die Seitenwangenverstelleinheit 12 umfasst auch mindestens zwei Klappeneinrichtungen mit jeweils zwei Klappen 15a, 15b, 15c, 15d, wobei in jeder Seitenwange 11a, 11b eine Klappeneinrichtung mit jeweils zwei Klappen 15a, 15b, 15c, 15d zugeordnet ist. Die jeweiligen zwei Klappen 15a, 15b, 15c, 15d sind an einer Struktur 16 der Rückenlehne 10 festgelegt und gelenkig miteinander verbunden. Sie sind in einer Ausgangsposition 17 angeordnet. In der Ausgangsposition 17 der Klappen 15a, 15c sind die Seitenwangen 11a, 11b in einer ursprünglichen Position 18 angeordnet, welche eine Nullstellung 19 oder eine durch den Insassen 7 voreingestellte Memoryposition 20 (siehe Figuren 5 und 6) sein kann.

Bei Auftreten des auslösenden Ereignisses 3 steuert die Steuerungseinrichtung 8 den Kompressor 13 dazu an, Druckluft in die Luftkammern 14a, 14b einzuleiten, sodass diese aufgebläht werden und die jeweils innere Klappe 15a, 15c aus der Ausgangsposition 17 in eine Aktivposition 21 überführt wird. Die Figur 4 zeigt die Seitenwangenverstelleinheit 12 mit der inneren Klappe 15a in der Aktivposition 21.

Durch das Überführen der inneren Klappen 15a, 15c in die Aktivposition 21 werden die Seitenwangen 11a, 11b gemäß den Richtungspfeilen 22a, 22b der Figur 3 aufgestellt. Wenn die inneren Klappen 15a, 15c durch Entleeren der Luftkammern 14a, 14b in die Ausgangsposition 17 zurückgeführt werden, werden die inneren Klappen 15a, 15c in die ursprüngliche Position 18 zurückgestellt. Die Steuerungseinrichtung 8 steuert den Kompressor 13 gemäß einem festgelegten Bewegungsmuster und/oder Bewegungsrhythmus an, so dass die Seitenwangen 11a, 11b dementsprechend aufgestellt, optional gehalten und zurückgestellt werden.

Die Figur 5 zeigt ein Positions-Zeit-Diagramm 23 über das Verstellen 26 der Seitenwangen 11a, 11b über die Zeit 27 zur taktilen Kommunikation mit dem Insassen 7. Bei Ansteuerung der Seitenwangenverstelleinheit 12 als die Funktionsvorrichtung 5 durch die Steuerungseinrichtung 8 werden die Seitenwangen 11a, 11b aus der Nullstellung 19 oder der Memoryposition 20 als ursprüngliche Position 18 heraus aufgestellt und in diese wieder zurückgestellt, wobei das Aufstellen 24 und das Zurückstellen 25 mehrfach unmittelbar aufeinanderfolgt und innerhalb eines übereinstimmenden Zeitraums von z.B. 1 Sekunde, 1,5 Sekunden, 2 Sekunden, 2,5 Sekunden oder 3 Sekunden erfolgt. Beide Seitenwangen 11a, 11b können simultan aufgestellt werden, ähnlich einem Flügelschlag. Alternativ können die Seitenwangen 11a, 11b im Wechsel aufgestellt und zurückgestellt werden.

Das Bewegungsmuster der Seitenwangen 11a, 11b im vorgegebenen Bewegungsrhythmus kann dem Insassen 7 auf nonverbale taktile Art den Hinweis und/oder die Warnung mitteilen, z. B. dass eine Ermüdung erkannt wurde und eine Fahrpause für den Insassen 7 empfohlen wird. Durch die taktile Kommunikation kann der Insasse 7 unmittelbar kontaktiert und auf den Hinweis und/oder die Warnung aufmerksam gemacht werden. Dies hat den Vorteil, dass der durch die Triggervorrichtung 2 ausgegebene Hinweis und/oder die Warnung nicht übersehen oder überhört werden kann.

Das Verstellen 26 der Seitenwangen 11a, 11b und somit die Kommunikationsfunktion 6 wird über eine begrenzte Zeit 27 von zum Beispiel 10 Sekunden, 20 Sekunden, 30 Sekunden oder 40 Sekunden ausgeführt und nach deren Ablauf beendet.

Zusätzlich zu der Seitenwangenverstelleinheit 12 umfasst die Funktionsvorrichtung 5 eine Verstelleinheit, mittels welcher der Fahrzeugsitz 4 als Kommunikationsfunktion 6 in eine Fahrzeuglängsrichtung bewegt werden kann und die Rückenlehne 10 relativ zu dem Sitz 9 geschwenkt werden kann. Die Funktionsvorrichtung 5 umfasst auch eine Lordosenstützenverstelleinheit, mittels der eine in der Rückenlehne 10 integrierte Lordosenstütze als Kommunikationsfunktion 6 verstellt werden kann und eine Massage- und/oder Vibrationseinheit, mittels der der Insasse 7 auf dem Fahrzeugsitz 5 als Kommunikationsfunktion 6 massiert werden kann.

Bei Auftreten des auslösenden Ereignisses 3 steuert die Steuerungseinrichtung 8 die Verstelleinheit dazu an, die Kommunikationsfunktion 6 auszuüben und den Fahrzeugsitz 4 zu verstellen. Die Steuerungseinrichtung 8 kann alternativ oder ergänzend die Lordosenstützenverstelleinheit dazu ansteuern, die Kommunikationsfunktion 6 auszuüben und die Lordosenstütze zu verstellen. In entsprechender Weise kann die Steuerungseinrichtung 8 die Massage- und/oder Vibrationseinheit dazu ansteuern, die Kommunikationsfunktion 6 auszuführen und eine Massage und/oder Vibration durchzuführen.

In der Figur 6 ist ein weiteres Positions-Zeit-Diagramm 29 gezeigt, aus welchem ein alternativer Bewegungsablauf bei dem Verstellen 26 der Seitenwangen 11a, 11b über die Zeit 27 zu entnehmen ist. Das Verstellen 26 umfasst das Aufstellen 24 der Seitenwangen 11a, 11b ausgehend von der ursprünglichen Position 18, ein Halten 28 der aufgestellten Seitenwangen 28 für einen gewissen Zeitraum von z.B. 1 Sekunde, 2 Sekunden, 3 Sekunden oder 4 Sekunden, und das darauffolgende Zurückstellen 25 der Seitenwangen 11a, 11b. Dieser Bewegungsablauf wird nur einmalig ausgeführt und dient im Rahmen der Kommunikationsfunktion 6 als Begrüßung des Insassen 7, wenn der das Fahrzeug startet, insbesondere, wenn er die Zündung oder den Motoranlasser betätigt. Die taktile Kommunikation sieht ein Drücken oder ein Umarmen des Insassen 7 durch die Seitenwangen 11a, 11b vor, wenn diese gemäß dem Bewegungsablauf verstellt werden. Der Insasse 7 fühlt sich im Fahrzeug auf dem Fahrzeugsitz 4 herzlich willkommen. Dies kann helfen, ein Wohlbefinden im Fahrzeug zu erhöhen und persönliche Bindung zu dem Fahrzeug zu entwickeln. Zusätzlich können die Kommunikationsfunktionen 6 der Verstelleinheit, der Lordosenstützenverstelleinheit und/oder der Massage- und Vibrationseinheit ausgeführt werden, um den Insassen 7 einen angenehmen Empfang in dem Fahrzeug zu kommunizieren, wenn er auf dem Fahrzeugsitz 4 Platz nimmt.

Grundsätzlich können die Seitenwangen 11a, 11b noch gemäß weiteren abgewandelten Bewegungsabläufen verstellt werden.

### Bezugszeichenliste:

- 1: Anordnung
- 2: Triggervorrichtung
- 3: auslösendes Ereignis
- 4: Fahrzeugsitz
- 5: Funktionsvorrichtung
- 6: Kommunikationsfunktion
- 7: Insasse
- 8: Steuerungseinrichtung
- 9: Sitz
- 10: Rückenlehne
- 11: a, b Seitenwangen
- 12: Seitenwangenverstelleinheit
- 13: Kompressor
- 14: a, b Luftkammern
- 15: a, b, c, d Klappen
- 16: Struktur
- 17: Ausgangsposition
- 18: ursprüngliche Position
- 19: Nullstellung
- 20: Memoryposition
- 21: Aktivposition
- 22: a, b Richtungspfeile
- 23: Positions-Zeit-Diagramm
- 24: Aufstellen
- 25: Zurückstellen
- 26: Verstellen
- 27: Zeit
- 28: Halten
- 29: weiteres Positions-Zeit-Diagramm

## Patentansprüche

1. Anordnung (1) zur taktilen Kommunikation, wobei die Anordnung (1) in einem Fahrzeug integrierbar ist,
wobei die Anordnung (1) mindestens eine Triggervorrichtung (2) zur Umsetzung und/oder Ausgabe eines auslösenden Ereignisses (3) aufweist,
wobei die Anordnung (1) mindestens einen Fahrzeugsitz (4) mit einer Funktionsvorrichtung (5) aufweist,
wobei die Funktionsvorrichtung (5) dazu ausgebildet ist, mindestens eine Kommunikationsfunktion (6) zur taktilen Kommunikation mit einem Insassen (7) auf dem Fahrzeugsitz (4) auszuführen,
wobei die Anordnung (1) eine Steuerungseinrichtung (8) zur Ansteuerung der Funktionsvorrichtung (5) in Abhängigkeit des auslösenden Ereignisses (3) umfasst,
wobei die Funktionsvorrichtung (5) eine Seitenwangenverstelleinheit (12) umfasst, deren Kommunikationsfunktion (6) ein Verstellen (26) mindestens einer Seitenwange (11a, 11b) des Fahrzeugsitzes (4) ist,
**dadurch gekennzeichnet, dass**
die Triggervorrichtung (2) eine Zündung zum Zünden oder einen Motoranlasser zum Anlassen eines Motors des Fahrzeugs umfasst, wobei das Zünden oder das Anlassen des Motors das auslösende Ereignis (3) bildet und
die Funktionsvorrichtung (5) dazu ausgebildet ist, eine Begrüßung des Insassen (7) auf dem Fahrzeugsitz (4) bei und/oder nach dem Zünden und/oder Starten des Motors mittels der Kommunikationsfunktion (6) taktil zu kommunizieren.

2. Anordnung (1) nach Anspruch 1, **dadurch gekennzeichnet, dass** das Verstellen (26) ein Aufstellen (24) und Zurückstellen (25) der Seitenwange (11a, 11b) umfasst, wobei das Verstellen (26) einmalig oder mehrmalig nach einem festgelegten Bewegungsmuster und/oder -rhythmus erfolgt.

3. Anordnung (1) nach Anspruch 1 oder 2, **dadurch gekennzeichnet, dass** die Funktionsvorrichtung (5) eine Massage- und/oder Vibrationseinheit umfasst, deren Kommunikationsfunktion (6) eine Massage- und/oder Vibrationsausführung an zumindest einem Bereich des Fahrzeugsitzes (4) ist.

4. Anordnung (1) nach einem der vorhergehenden Ansprüche, **dadurch gekennzeichnet, dass** die Funktionsvorrichtung (5) eine Verstelleinheit umfasst, deren Kommunikationsfunktion (6) eine Verstellung des Fahrzeugsitzes (4) ist.

5. Anordnung (1) nach einem der vorhergehenden Ansprüche, **dadurch gekennzeichnet, dass** die Funktionsvorrichtung (5) eine Lordosenstützenverstelleinheit umfasst, deren Kommunikationsfunktion (6) eine Verstellung einer Lordosenstütze des Fahrzeugsitzes (4) ist.

6. Anordnung (1) nach einem der vorhergehenden Ansprüche, **dadurch gekennzeichnet, dass** die Triggervorrichtung (2) eine Warn- und/oder Hinweiseinrichtung umfasst, wobei die Warn- und/oder Hinweiseinrichtung einen Hinweis und/oder eine Warnung als das auslösende Ereignis (3) ausgibt.

7. Anordnung (1) nach Anspruch 6, **dadurch gekennzeichnet, dass** die Warn-und/oder Hinweiseinrichtung eine Anzeigeeinrichtung zur Anzeige eines Symbols, eines Zeichens oder einer Zeichenserie als der Hinweis oder als die Warnung ist.

8. Anordnung (1) nach Anspruch 6 oder 7, **dadurch gekennzeichnet, dass** die Warn-und/oder Hinweiseinrichtung eine Audioeinrichtung zur akustischen Ausgabe eines Tons, einer Tonfolge, eines Geräusches oder einer Sprachansage ist.

9. Anordnung (1) nach einem der Ansprüche 6 bis 8, **dadurch gekennzeichnet, dass** die Warn- und/oder Hinweiseinrichtung ein Lenkrad mit einer integrierten Vibrationseinrichtung ist, wobei die Vibrationseinrichtung das Lenkrad zur Ausgabe des Hinweises und/oder der Warnung vibrieren lässt.

10. Anordnung (1) nach einem der Ansprüche 6 bis 9, **dadurch gekennzeichnet, dass** die Funktionsvorrichtung (5) dazu ausgebildet ist, den Hinweis und/oder die Warnung mittels der Kommunikationsfunktion (6) taktil an einen Insassen (7) auf dem Fahrzeugsitz (4) zu kommunizieren.

11. Anordnung (1) nach einem der vorhergehenden Ansprüche, **dadurch gekennzeichnet, dass** die Steuerungseinrichtung die Funktionsvorrichtung (5) nach einem definierten und/oder definierbaren Zeitraum dazu ansteuert, die Ausführung der Kommunikationsfunktion (6) zu beenden.

12. Fahrzeug mit der Anordnung (1) nach einem der vorhergehenden Ansprüche.

13. Verfahren zur taktilen Kommunikation mit der Anordnung (1) nach einem der Ansprüche 1 bis 11, **dadurch gekennzeichnet, dass** die Kommunikationsfunktion (6) in Abhängigkeit des auslösenden Ereignisses (3) angesteuert wird und dass mittels der Kommunikationsfunktion (6) mit einem auf einem Fahrzeugsitz (4) sitzenden Insassen (7) taktil kommuniziert wird.

## Claims

1. Arrangement (1) for tactile communication, wherein the arrangement (1) is integrable into a vehicle, whereby the arrangement (1) comprises at least one trigger device (2) for implementing and/or outputting a triggering event (3), whereby the arrangement (1) comprises at least one vehicle seat (4) with a functional device (5), whereby the functional device (5) is configured to perform at least one communication function (6) for tactile communication with an occupant (7) on the vehicle seat (4), whereby the arrangement (1) comprises a control device (8) for controlling the functional device (5) depending on the triggering event (3), whereby the functional device (5) comprises a side bolster adjustment unit (12), the communication function (6) of which adjusts (26) at least one side bolster (11a, 11b) of the vehicle seat (4). is, **characterized in that** the trigger device (2) comprises an ignition for igniting or a motor starter for starting the vehicle's engine, wherein the ignition or starting of the engine constitutes the triggering event (3), and the functional device (5) is configured to tactilely communicate a greeting to the occupant (7) in the vehicle seat (4) during and/or after ignition and/or starting of the engine by means of the communication function (6).

2. Arrangement (1) according to claim 1, **characterized in that** the adjustment (26) comprises raising (24) and lowering (25) the side bolster (11a, 11b), wherein the adjustment (26) is performed once or several times according to a defined movement pattern and/or rhythm.

3. Arrangement (1) according to claim 1 or 2, **characterized in that** the functional device (5) comprises a massage and/or vibration unit, the communication function (6) of which is a massage and/or vibration function applied to at least one area of the vehicle seat (4).

4. Arrangement (1) according to any one of the preceding claims, **characterized in that** the functional device (5) comprises an adjustment unit, the communication function (6) of which is an adjustment of the vehicle seat (4).

5. Arrangement (1) according to any one of the preceding claims, **characterized in that** the functional device (5) comprises a lumbar support adjustment unit, the communication function (6) of which is an adjustment of a lumbar support of the vehicle seat (4).

6. Arrangement (1) according to any one of the preceding claims, **characterized in that** the trigger device (2) comprises a warning and/or indicator device, wherein the warning and/or indicator device outputs an indicator and/or a warning as the triggering event (3).

7. Arrangement (1) according to claim 6, **characterized in that** the warning and/or indicator device is a display device for displaying a symbol, character, or series of characters as the indicator or warning.

8. Arrangement (1) according to claim 6 or 7, **characterized in that** the warning and/or indicator device is an audio device for acoustically outputting a tone, a sequence of tones, a noise, or a voice announcement.

9. Arrangement (1) according to any one of claims 6 to 8, **characterized in that** the warning and/or indicator device is a steering wheel with an integrated vibration device, wherein the vibration device causes the steering wheel to vibrate to output the indicator and/or warning.

10. Arrangement (1) according to any one of claims 6 to 9, **characterized in that** the functional device (5) is configured to communicate the notification and/or warning tactilely to an occupant (7) in the vehicle seat (4) via the communication function (6).

11. Arrangement (1) according to any one of the preceding claims, **characterized in that** the control device activates the functional device (5) after a defined and/or definable period of time to terminate the execution of the communication function (6).

12. Vehicle with the arrangement (1) according to any one of the preceding claims.

13. Method for tactile communication with the arrangement (1) according to one of claims 1 to 11, **characterized in that** the communication function (6) is controlled depending on the triggering event (3) and that tactile communication is carried out with an occupant (7) sitting on a vehicle seat (4) by means of the communication function (6).

## Revendications

1. Dispositif (1) de communication tactile, intégrable à un véhicule, comprenant au moins un dispositif de déclenchement (2) pour la mise en œuvre et/ou la transmission d'un événement de déclenchement (3), comprenant au moins un siège de véhicule (4) muni d'un dispositif fonctionnel (5), comprenant ce dispositif fonctionnel (5) configuré pour exécuter au moins une fonction de communication (6) par voie tactile avec un occupant (7) du siège de véhicule (4), comprenant un dispositif de commande (8) pour le dispositif fonctionnel (5) en fonction de l'événement de déclenchement (3), comprenant le dispositif fonctionnel (5) comprenant une unité de réglage de renfort latéral (12) dont la fonction de communication (6) ajuste (26) au moins un renfort latéral (11a, 11b) du siège de véhicule (4). **Caractérisé en ce que** : le dispositif de déclenchement (2) comprend un allumeur pour allumer le moteur ou un démarreur pour démarrer le moteur du véhicule, l'allumage ou le démarrage du moteur constituant l'événement déclencheur (3) ; le dispositif fonctionnel (5) est configuré pour communiquer tactilement un message de bienvenue à l'occupant (7) du siège (4) du véhicule pendant et/ou après l'allumage et/ou le démarrage du moteur, au moyen de la fonction de communication (6).

2. Dispositif (1) selon la revendication 1, **caractérisé en ce que** le réglage (26) comprend le relèvement (24) et l'abaissement (25) du support latéral (11a, 11b), le réglage (26) étant effectué une ou plusieurs fois selon un schéma et/ou un rythme de mouvement défini.

3. Dispositif (1) selon la revendication 1 ou 2, **caractérisé en ce que** le dispositif fonctionnel (5) comprend une unité de massage et/ou de vibration dont la fonction de communication (6) consiste en une fonction de massage et/ou de vibration appliquée à au moins une zone du siège du véhicule (4).

4. Dispositif (1) selon l'une quelconque des revendications précédentes, **caractérisé en ce que** le dispositif fonctionnel (5) comprend une unité de réglage dont la fonction de communication (6) consiste en un réglage du siège du véhicule (4).

5. Dispositif (1) selon l'une quelconque des revendications précédentes, **caractérisé en ce que** le dispositif fonctionnel (5) comprend une unité de réglage du soutien lombaire dont la fonction de communication (6) consiste en un réglage du soutien lombaire du siège du véhicule (4).

6. Dispositif (1) selon l'une quelconque des revendications précédentes, **caractérisé en ce que** le dispositif de déclenchement (2) comprend un dispositif d'avertissement et/ou d'indication, lequel dispositif émet un signal lumineux et/ou un avertissement comme événement de déclenchement (3).

7. Dispositif (1) selon la revendication 6, **caractérisé en ce que** le dispositif d'avertissement et/ou d'indication est un dispositif d'affichage permettant d'afficher un symbole, un caractère ou une série de caractères servant d'indicateur ou d'avertissement.

8. Dispositif (1) selon la revendication 6 ou 7, **caractérisé en ce que** le dispositif d'avertissement et/ou d'indication est un dispositif audio émettant un son, une séquence de sons, un bruit ou une annonce vocale.

9. Dispositif (1) selon l'une quelconque des revendications 6 à 8, **caractérisé en ce que** le dispositif d'avertissement et/ou d'indication est un volant doté d'un dispositif de vibration intégré, ce dernier provoquant la vibration du volant pour émettre l'indicateur et/ou l'avertissement.

10. Dispositif (1) selon l'une quelconque des revendications 6 à 9, **caractérisé en ce que** le dispositif fonctionnel (5) est configuré pour communiquer la notification et/ou l'avertissement par voie tactile à un occupant (7) du siège (4) du véhicule, via la fonction de communication (6).

11. Dispositif (1) selon l'une quelconque des revendications précédentes, **caractérisé en ce que** le dispositif de commande active le dispositif fonctionnel (5) après une période de temps définie et/ou définissable afin de mettre fin à l'exécution de la fonction de communication (6).

12. Véhicule comportant le dispositif (1) selon l'une quelconque des revendications précédentes.

13. Procédé de communication tactile avec le dispositif (1) selon l'une quelconque des revendications 1 à 11, **caractérisé en ce que** la fonction de communication (6) est commandée en fonction de l'événement déclencheur (3) et que la communication tactile est réalisée avec un occupant (7) assis sur un siège de véhicule (4) au moyen de la fonction de communication (6).
